# EUROPÄISCHE PATENTSCHRIFT

(11) **EP 2 836 406 B1**
(45) Veröffentlichungstag und Bekanntmachung des Hinweises auf die Patenterteilung: **14.09.2016**
(21) Anmeldenummer: 13702917.9
(22) Anmeldetag: 01.02.2013
(51) Int. Cl.: B01D 53/04

(54) **LUFTAUFBEREITUNGSANLAGE FÜR DIE DRUCKLUFTVERSORGUNG VON NUTZKRAFTFAHRZEUGEN**
COMPRESSED AIR SYSTEM FOR THE AIR SUPLY OF LOAD VEHICLES
SYSTÈME D'AIR COMPRIMÉ POUR L'APPROVISIONNEMENT D'AIR D'UN CAMION

(30) Priorität: 12.04.2012 DE 102012007365
(43) Veröffentlichungstag der Anmeldung: 18.02.2015
(73) Patentinhaber: WABCO GmbH, 30453 Hannover (DE)
(72) Erfinder: DIEKMEYER, Heinrich, 30890 Barsinghausen (DE); EGGEBRECHT, Detlev, 30519 Hannover (DE); FEYERABEND, Konrad, 30625 Hannover (DE); HANSEN, Yves, 30519 Hannover (DE); RÜTER, Rodmar, 30938 Burgwedel (DE)
(74) Vertreter: Lauerwald, Jörg
(86) Internationale Anmeldenummer: PCT/EP2013/000304
(87) Internationale Veröffentlichungsnummer: WO 2013/152817

(56) Entgegenhaltungen:
- DE-A1-102005 018 889
- DE-A1-102008 033 696

## Beschreibung

Die Erfindung betrifft eine Luftaufbereitungsanlage für die Druckluftversorgung von Nutzkraftfahrzeugen, mit mehreren an eine Hauptversorgungsleitung angeschlossenen Druckluftkreisen, wobei eine Anhänger- und/oder Feststellbremsenversorgungsleitung an eine Versorgungsleitung eines oder mehrerer anderer Druckluftkreise angeschlossen ist, und wobei in der Anhänger- und/oder Feststellbremsenversorgungsleitung eine bei einem vorgegebenen Versorgungsdruck automatisch öffnende, zusätzlich pneumatisch in eine Öffnungsstellung vorsteuerbare Ventilanordnung vorgesehen ist.

Bei Luftaufbereitungsanlagen dieser Art wird die Druckluft im allgemeinen von einem im Fahrzeug angeordneten, vom Antriebsmotor angetriebenen Kompressor und gegebenenfalls von einer externen Druckluftquelle geliefert sowie über einen Versorgungsanschluss in die Luftaufbereitungsanlage eingespeist. Über die verschiedenen Druckluftkreise des Fahrzeugs werden neben dem bereits genannten Druckluftversorgungskreis für einen Anhänger bzw. für Feststellbremsen typischerweise auch eine Luftfederungsanlage, Betriebsbremsen für die Vorder- und Hinterachse des Zugfahrzeugs, seine Feststellbremse, eine Getriebeschaltvorrichtung und dergleichen versorgt. Dabei sind insbesondere für die pneumatischen Betriebsbremskreise, den Luftfederkreis und den pneumatischen Anhängerkreis Druckbehälter als Druckluftspeicher vorgesehen.

Die verschiedenen Druckluftkreise des Fahrzeugs werden beim Befüllen der zunächst drucklosen Druckluftanlage in an sich bekannter Weise durch eine Steuerungseinrichtung gemäß einem vorgegebenen, bestimmte Prioritäten berücksichtigenden Ablauf angesteuert bzw. mit Druckluft versorgt, der beispielsweise sicherstellen soll, dass eine Feststellbremse erst gelöst werden kann, wenn die Betriebsbremsen funktionsbereit sind und ein Fahrer sich im Fahrerhaus befindet. Um die unterschiedlichen Anforderungen an eine moderne Luftaufbereitungsanlage der gattungsgemäßen Art zu erfüllen, sind die Steuerungseinrichtung und die von dieser angesteuerten Komponenten der Luftaufbereitungsanlage inzwischen recht aufwendig in Bezug auf deren Herstellkosten und den dafür im Fahrzeug freizuhaltenden Einbauraum.

Aus der DE 10 2005 018 889 B4 ist bereits eine Luftaufbereitungsanlage der eingangs genannten Art bekannt, bei der eine in einer Anhänger- und/oder Feststellbremsenversorgungsleitung angeordnete vorsteuerbare Ventilanordnung dazu dient, den Anhängerdruckluftkreis auch dann mit Druckluft versorgen zu können, wenn der zum automatischen Öffnen der Ventilanordnung vorgegebene Versorgungsdruck in der Anhänger- und/oder Feststellbremsenversorgungsleitung nicht erreicht wird. Der Anhängerdruckluftkreis hat keinen eigenen Druckbehälter, sondern wird über die Betriebsbremsdruckluftkreise mitversorgt. Die vorsteuerbare Ventilanordnung weist ein Schließventil auf, welches oberhalb des vorgegebenen Versorgungsdruckes durch pneumatische Vorsteuerung öffnet, sowie ein dem Schließventil zugeordnetes, über eine Steuerelektronik elektrisch ansteuerbares Stellglied, mittels dem das Schließventil auch unterhalb des vorgegebenen Versorgungsdruckes geöffnet werden kann, jedoch unter anderem unter der Voraussetzung, dass der den Betriebsbremsen zur Verfügung gestellte Druck ausreichend für eine Bremsung ist.

Diese bekannte Ventilanordnung wird baulich als verhältnismäßig aufwendig und teuer in der Herstellung beurteilt. Außerdem kann mit der bekannten Ventilanordnung die von den Nutzern der bekannten Luftaufbereitungsanlage gewünschte Aufgabe nicht gelöst werden, auch unter ungünstigen Bedingungen, also beispielsweise bei einem starken leckagebedingten Druckabfall in dem Anhängerdruckluftkreis, einen ausreichend hohen Druck in denjenigen Druckluftkreisen zu gewährleisten, über die der Druckluftkreis des Anhängers mitversorgt wird, wobei dieser Druck in den anderen Druckluftkreisen im allgemeinen über dem Schließdruck der dem Anhängerdruckluftkreis zugeordneten Ventilanordnung liegen soll.

Vor diesem Hintergrund liegt der Erfindung die Aufgabe zugrunde, eine Luftaufbereitungsanlage, bei welcher der Anhänger- und/oder Feststellbremsendruckluftkreis keinen eigenen Druckbehälter hat sondern über andere Druckluftkreise mitversorgt wird, so auszubilden, dass dann, wenn der Druck in dem Anhänger- und/oder Feststellbremsendruckluftkreis beispielsweise leckagebedingt stark abfällt, die den Anhänger- und/oder Feststellbremsendruckluftkreis mitversorgenden Druckluftkreise einen für deren sicheren Betrieb ausreichend hohen Druck behalten und der Anhänger- und/oder Feststellbremsendruckluftkreis aus diesen anderen Druckluftkreisen dennoch mit Druckluft nachbefüllbar ist. Selbstverständlich würde eine solche Nachbefüllung nur dann erfolgen, wenn die Leitungen des Anhänger- und/oder Feststellbremsendruckluftkreises noch weitgehend intakt sind.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass die genannte Aufgabe durch ein gezieltes Aufstauen der Druckluft vor der dem Anhänger- und/oder Feststellbremsendruckluftkreis zugeordneten Ventileinheit gelöst werden kann, beispielsweise durch ein gezieltes Verändern des Öffnungsdrucks der Ventileinheit beim Auftreten der oben genannten Betriebssituation.

Demnach geht die Erfindung aus von einer Luftaufbereitungsanlage für die Druckluftversorgung von Nutzkraftfahrzeugen, mit mehreren an eine Hauptversorgungsleitung angeschlossenen Druckluftkreisen, wobei eine Anhänger- und/oder Feststellbremsenversorgungsleitung an eine Versorgungsleitung eines oder mehrerer anderer Druckluftkreise angeschlossen ist, und wobei in der Anhänger- und/oder Feststellbremsenversorgungsleitung eine bei einem vorgegebenen Versorgungsdruck automatisch öffnende, zusätzlich pneumatisch in eine Öffnungsstellung vorsteuerbare Ventilanordnung vorgesehen ist.

Zur Lösung der gestellten Aufgabe ist vorgesehen, dass die Ventilanordnung ein Wegeventil aufweist, welches in einer ersten Ventilstellung geöffnet ist, und in einer zweiten Ventilstellung ein in Richtung zu einem Anhänger- und/oder Feststellbremsenversorgungsanschluss hin öffnendes, durch eine Vorspannfeder in Schließrichtung belastetes Rückschlagventil bildet, sowie ein dem Wegeventil nachgeordnetes, bei einem vorgegebenen Öffnungsdruck öffnendes Überströmventil.

Bei der ersten Ventilstellung strömt die Druckluft durch das Wegeventil hindurch zum Überströmventil, welches bei Erreichen des vorbestimmten Öffnungsdrucks vor dem Überströmventil öffnet und bei Erreichen des vorbestimmten Schließdruckes hinter dem Überströmventil wieder schließt. In der zweiten Ventilstellung wird der Druck der Druckluft an dem internen federbelasteten Rückschlagventil reduziert, so dass das
Überströmventil erst dann öffnet, wenn vor dem Rückschlagventil ein vorgegebener Öffnungsdruck erreicht wird, welcher über dem Öffnungsdruck des Überströmventils liegt. Auf diese Weise baut sich vor dem Rückschlagventil, also in dem Druckluftkreis bzw. in den Druckluftkreisen, welche von der gleichen Leitung wie der Anhängerdruckluftkreis mit Druckluft versorgt werden, ein solcher Druck auf, der über dem Öffnungsdruck des Überströmventils liegt. Das Wegeventil wird pneumatisch über wenigstens ein von einer elektronischen Steuerung angesteuertes Vorsteuerventil betätigt, wie noch im Einzelnen dargelegt wird.

Im normalen Betrieb nimmt das genannte Wegeventil seine erste Ventilstellung ein, bei der es geöffnet ist, so dass dessen internes Rückschlagventil unwirksam ist.

Sofern das interne Rückschlagventil des genannten Wegeventils beispielsweise auf einen Staudruck von ca. 2,5 bar ausgelegt ist, dann kann etwa beim Befüllen der zunächst überdrucklosen Luftaufbereitungsanlage durch Verstellen des Wegeventils in seine zweite Ventilstellung ein um 2,5 bar erhöhter Druck in denjenigen Druckluftkreisen aufgebaut und aufrechterhalten werden, von denen der Anhänger- und/oder Feststellbremsendruckluftkreis mit Druckluft mitversorgt wird. Dadurch kann sichergestellt werden, dass die Ventilanordnung mit dem genannten Wegeventil erst dann öffnet, wenn diese den Anhänger- und/oder Feststellbremsendruckluftkreis mit Druckluft mitversorgenden Druckluftkreise ausreichend befüllt worden sind, d.h. wenn beispielsweise ein definierter Summendruck in diesen Druckluftkreisen erreicht wurde.

Wenn beispielsweise mittels Drucksensoren im Anhängerdruckluftkreis bzw. in der Anhänger- und/oder Feststellbremsenversorgungsleitung ein fehlerhafter Druckabfall erkannt wird, der auf eine Leckage oder einen Druckluftkreisabriss hinweisen könnte, ist es mit der erfindungsgemäßen Ventilanordnung außerdem möglich, den Schließdruck des Anhängerdruckluftkreises im beschriebenen Fall um 2,5 bar zu erhöhen, so dass in denjenigen Druckluftkreisen, von denen der Anhängerdruckluftkreis mit Druckluft mitversorgt wird, ein höherer gesicherter Druck gewährleistet ist.

Gemäß einer Ausgestaltung der Erfindung kann vorgesehen sein, dass das Wegeventil durch Druckbeaufschlagung seines pneumatischen Vorsteuereingangs gegen die Kraft einer Rückstellfeder in seine zweite Ventilstellung verstellbar ist. Ohne pneumatische Ansteuerung nimmt es seine erste, vollständig geöffnete Ventilstellung ein.

Nach einer zweiten Variante kann vorgesehen sein, dass das Wegeventil in seiner ersten Ventilsstellung durch Druckbeaufschlagung seines pneumatischen Vorsteuereingangs gegen eine eingangsseitig und ausgangsseitig wirkende Druckkraft in Richtung seiner zweiten Ventilstellung verstellbar ist.

In weiterer Ausgestaltung kann vorgesehen sein, dass der Vorsteuereingang des Wegeventils über ein zugeordnetes, von einer elektronischen Steuerung angesteuertes, im Folgenden als Magnetventil bezeichnetes Wegeventil be- und entlüftbar ist. Derartige Magnetventile sind einfache, marktübliche und damit preiswerte Bauelemente.

Gemäß einer anderen Ausgestaltung der Erfindung ist das Wegeventil über einen ersten pneumatischen Vorsteuereingang in Richtung seiner zweiten Ventilstellung gegen die Kraft einer Rückstellfeder und über einen zweiten pneumatischen Vorsteuereingang in Richtung seiner ersten Ventilstellung verstellbar. Ohne jede Ansteuerung wird auch dieses Wegeventil durch die Rückstellfeder in seiner ersten Ventilstellung gehalten.

Die beschriebenen Wegeventile sind jeweils als 2/2-Wegeventile ausgebildet, sie haben demnach zwei Ventilstellungen und zwei Anschlüsse.

Bei einer Luftaufbereitungsanlage mit wenigstens zwei über ein jeweils zugeordnetes Magnetventil versorgten Druckluftkreisen, beispielsweise einem Kompressorsteuerungskreis und einem Regenerationskreis, ist gemäß einer weiteren Ausgestaltung der Erfindung vorgesehen, dass der Ausgang eines ersten dieser beiden Magnetventile mit dem ersten Vorsteuereingang des Wegeventils in der Anhänger- und/oder Feststellbremsenversorgungsleitung und der Ausgang des zweiten Magnetventils mit dem zweiten Vorsteuereingang des Wegeventils in der Anhänger- und/oder Feststellbremsenversorgungsleitung verbunden ist. Auf diese Weise kann bei der Betätigung dieser Magnetventile gleichzeitig das Wegeventil in der Anhänger- und/oder Feststellbremsenversorgungsleitung angesteuert werden, so dass sich ein gesondertes Magnetventil für diese Aufgabe erübrigt.

So kann beispielsweise das erste Magnetventil als ein Regenerations-Steuerventil vorgesehen sein, welches in einer ersten Ventilstellung eine Regenerationsleitung sowie den ersten Vorsteuereingang des Wegeventils in der Anhänger- und/oder Feststellbremsenversorgungsleitung mit einer Entlüftungsleitung verbindet, und in der zweiten Ventilstellung die Hauptversorgungsleitung mit der Regenerationsleitung sowie über eine Abzweigung die Hauptversorgungsleitung mit dem ersten Vorsteuereingang des Wegeventils in der Anhänger- und/oder Feststellbremsenversorgungsleitung verbindet.

Das zweite Magnetventil kann als ein Kompressor-Steuerventil vorgesehen sein, welches in einer ersten Ventilstellung den Kompressorsteuerungsanschluss sowie den zweiten Vorsteuereingang des Wegeventils in der Anhänger- und/oder Feststellbremsenversorgungsleitung mit einer Entlüftungsleitung verbindet, und in der zweiten Ventilstellung die Hauptversorgungsleitung mit einem Kompressor-Steuerungsanschluss sowie über eine Abzweigung die Hauptversorgungsleitung mit dem zweiten Vorsteuereingang des Wegeventils in der Anhänger- und/oder Feststellbremsenversorgungsleitung verbindet. Dies wird anhand von Ausführungsbeispielen noch im Einzelnen dargelegt.

Eine weitere Ausgestaltung der Erfindung sieht vor, dass in der Regenerationsleitung hinter der Abzweigung zum Wegeventil der Anhänger- und/oder Feststellbremsenversorgungsleitung ein zusätzliches vorgesteuertes Wegeventil angeordnet ist, welches in einer ersten Ventilstellung einen stromabwärtigen Abschnitt der Regenerationsleitung mit einer Entlüftungsöffnung verbindet, wobei dieses zusätzliche vorgesteuerte Wegeventil über einen am Ausgang des zweiten Magnetventils angeschlossenen Vorsteuereingang in Richtung seiner zweiten Ventilstellung gegen die Kraft einer Rückstellfeder verstellbar (vorsteuerbar) ist, und in der zweiten Ventilstellung geöffnet ist. Diese Anordnung ermöglicht eine Arbeitsweise der Luftaufbereitungsanlage, bei der Druckluft nur dann aus dieser über einen Lufttrockner entlassen wird, wenn das Trocknungsmittel des Lufttrockners regeneriert werden muss. Hierzu werden das dem Kompressorsteuerungskreis zugeordnete Magnetventil, das dem Regenerationskreis zugeordnete Magnetventil und ein Entlüftungsventil betätigt, also geöffnet.

Die Erfindung wird nachfolgend anhand mehrerer Ausführungsbeispiele weiter erläutert. Dazu ist der Beschreibung eine Zeichnung beigefügt. In dieser zeigt beispielhaft
Fig. 1 einen Schaltplan einer gemäß der Erfindung ausgebildeten Luftaufbereitungsanlage mit einem gesonderten Magnetventil zur Ansteuerung des als 2/2-Wegeventil ausgelegten Wegeventils,
Fig. 2 einen Schaltplan etwa gemäß Fig. 1, jedoch ohne ein gesondertes Magnetventil,
Fig. 3 einen Schaltplan etwa gemäß Fig. 2, mit einem zusätzlichen vorgesteuerten Wegeventil für die Regenerationssteuerung,
Fig. 4 eine schematische Schnittansicht eines 2/2-Wegeventils für den Schaltplan gemäß der Fig. 1,
Fig. 5 eine schematische Schnittansicht eines 2/2-Wegeventils für den Schaltplan gemäß Fig. 2 und Fig. 3, sowie
Fig. 6 eine schematische Schnittansicht des zusätzlichen vorgesteuerten Wegeventils für den Schaltplan gemäß der Fig. 3.

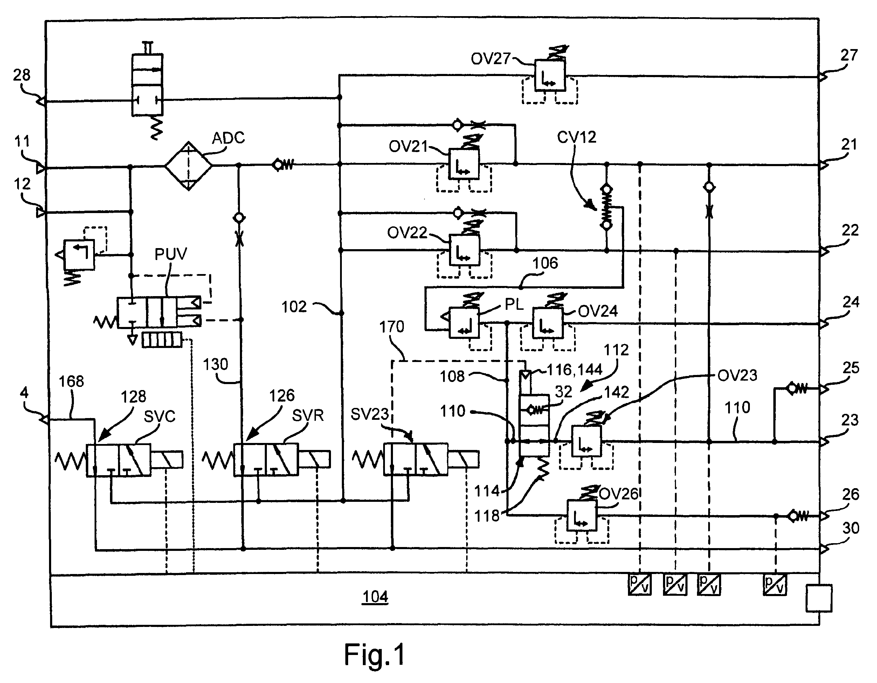

Das in Fig. 1 dargestellte Schaltbild zeigt schematisch eine Luftaufbereitungsanlage für die Druckluftversorgung von Nutzkraftfahrzeugen mit einem in weiten Teilen konventionellen Aufbau, wobei Komponenten, die zur Erfindung nichts beitragen, nicht näher beschrieben werden.

Die Anlage wird von einem im Fahrzeug integrierten, nicht dargestellten Kompressor über den Anschluss 11 oder wahlweise von einer externen Druckluftquelle über den Anschluss 12 mit Druckluft versorgt. Die Druckluft strömt über einen Lufttrockner ADC und ein nicht weiter bezeichnetes Rückschlagventil zu einer Hauptversorgungsleitung 102, an die unterschiedliche Druckluftkreise angeschlossen sind, die im Folgenden in der Reihenfolge ihrer Nummerierung benannt werden.

Der Anschluss 4 führt zu einer Kompressorsteuerung, der Anschluss 21 versorgt die Betriebsbremse für die Hinterachse des Fahrzeugs, der Anschluss 22 die Betriebsbremse für die Vorderachse, der Anschluss 23 dient der Versorgung des Anhängers mit Druckluft, der Anschluss 24 dient der Versorgung von einigen nicht näher bezeichneten weiteren Verbrauchern mit Druckluft, der Anschluss 25 versorgt wenigstens eine Feststellbremse, der Anschluss 26 dient der Versorgung einer Schaltvorrichtung eines Schaltgetriebes mit Druckluft, der Anschluss 27 dient der Versorgung der Luftfederung und der Anschluss 28 versorgt eine Reifenbefüllvorrichtung mit Druckluft. Der gewünschte Druck in den verschiedenen Druckluftkreisen wird über jeweils zugeordnete Überströmventile OV21, OV22, OV23, OV24, OV26, OV27 und einem Druckbegrenzungsventil PL eingestellt. Ausnahmen bilden der Druck für den Reifenfüllkreises und der Druck für die Kompressorsteuerung, die an den jeweiligen Anschlüssen 28 bzw. 4 ungeregelt zur Verfügung gestellt werden.

Die in der Fig. 1 dargestellte Luftaufbereitungsanlage umfasst ferner zwei von einer elektronischen Steuerungseinrichtung 104 ansteuerbare Magnetventile, nämlich Magnetventil SVC für die Kompressoransteuerung und Magnetventil SVR für eine Regenerationsluftsteuerung, welche jeweils eine Hauptversorgungsleitung 102 mit den zugeordneten Ausgängen 128, 126 bzw. diese Ausgänge 128, 126 mit einem Entlüftungsanschluss 30 verbinden können, wie an sich bekannt ist. Außerdem ist ein drittes Magnetventil SV23 vorhanden, welches als Vorsteuerventil für ein in einer Anhänger- und/oder Feststellbremsenversorgungsleitung 110 angeordnetes 2/2-Wegeventil 114 dient. Weiter ist in Fig. 1 erkennbar, dass die Hauptversorgungsleitung 102 über das erste Magnetventil SVR und eine Regenerationsleitung 130 mit einem Entlüftungsventil PUV verbindbar ist.

Die drei Magnetventile SVC, SVR, SV23 dieser Luftaufbereitungsanlage sind erkennbar über gestrichelt gezeichnete Steuerungsleitungen mit der Steuerungseinrichtung 104 verbunden. Gesondert hingewiesen wird auf nur schematisch dargestellte Drucksensoren (p/v), die den Druck der Druckluft in den zu den Anschlüssen 21, 22, 23, 26 der Luftaufbereitungsanlage führenden Leitungen ermitteln und über gestrichelt dargestellte Sensorleitungen der elektronischen Steuerungseinrichtung 104 zuführen.

Der Anschluss 23 für den Anhängerdruckluftkreis wird über ein Wechselventil ohne Rückströmung CV12 von den die Anschlüsse 21 und 22 versorgenden Betriebsbremsdruckluftkreisen über eine Versorgungsleitung 106, ein Druckbegrenzungsventil PL, eine Versorgungsleitung 108 und eine in der davon abzweigenden Anhänger- und/oder Feststellbremsenversorgungsleitung 110 angeordneten vorsteuerbaren Ventilanordnung 112 mit Druckluft versorgt, deren Funktion nachfolgend beschrieben wird. Nur ergänzend wird angemerkt, dass über die Versorgungsleitung 106, das Druckbegrenzungsventil PL und das Überströmventil OV24 auch der Anschluss 24 für den Druckluftkreis der weiteren Verbraucher mitversorgt wird.

Die Ventilanordnung 112 umfasst ein vorsteuerbares 2/2-Wegeventil 114 mit einem Vorsteuereingang sowie ein Überströmventil OV23, wobei das Wegeventil 114 in einer ersten, in der Fig. 1 dargestellten Ventilstellung geöffnet ist, so dass die Druckluft über das Überströmventil OV23 dem Anschluss 23 für den Anhängerdruckluftkreis und dem Anschluss 25 für den Feststellbremsenversorgungskreis zugeführt wird. Dieser Modus entspricht dem Normalbetrieb.

Bei einer Befüllung der zunächst überdrucklosen oder einen nur geringen Überdruck aufweisenden Druckluftanlage bzw. Luftaufbereitungsanlage kann das 2/2-Wegeventil 114 in seine zweite Ventilstellung geschaltet werden, bei der es ein in Richtung zum Anschluss 23 für den Anhängerdruckluftkreis hin öffnendes, durch eine Vorspannfeder 32 in Schließrichtung belastetes Rückschlagventil bildet, wie aus der Zeichnung ohne weiteres zu erkennen ist. Die Vorspannfeder 32 für die Rückschlagventilfunktion des 2/2-Wegeventils 114 ist in diesem Ausführungsbeispiel auf eine Druckdifferenz von 2,5 bar eingestellt, wodurch Leitungen zu den Anschlüssen 21 und/oder 22 für die Betriebsbremskreise der Vorderachse und/oder der Hinterachse des Fahrzeugs beim Befüllen der zuvor drucklosen Druckluftanlage bzw. Luftaufbereitungsanlage mit einem um 2,5 bar höheren Druck befüllt werden müssen, bevor das Überströmventil OV23 öffnen kann, sofern sich das 2/2-Wegeventil in seiner zweite Ventilstellung mit aktivierter Rückschlagventilfunktion befindet.

Ein weiterer Vorteil der Luftaufbereitungsanlage gemäß der Erfindung besteht darin, dass dann, wenn im Anhängerdruckluftkreis (Anschluss 23) oder im Feststellbremskreis (Anschluss 25) ein fehlerhafter Druckabfall vorliegt und erkannt wird, der auf eine Leckage oder einen Druckluftkreisabriss hinweisen könnte, durch Betätigung des 2/2-Wegeventils 114 in seine zweite Ventilstellung (Rückschlagventilfunktion) der verbleibende Restdruck (gesicherter Druck) in den Betriebsbremskreisen (Anschlüsse 21, 22) gegenüber dem Schließdruck des Überströmventils OV23 um 2,5 bar angehoben werden kann, um eine deutlich höhere Bremsleistung zu ermöglichen, als es bei einem fehlerbedingten Druckabfall im Normalbetrieb möglich wäre.

Das 2/2-Wegeventil 114 gemäß dem Ausführungsbeispiel der Fig. 1 wird mittels des dritten Magnetventils SV23 betätigt, indem Druckluft von diesem Magnetventil SV23 über eine Vorsteuerleitung 170 und einen pneumatischen Vorsteuereingang 116 zugeführt wird. Dadurch wird das 2/2-Wegeventil 114 gegen die Kraft einer zugeordneten Rückstellfeder 118 in Richtung seiner zweiten Ventilstellung verstellt.

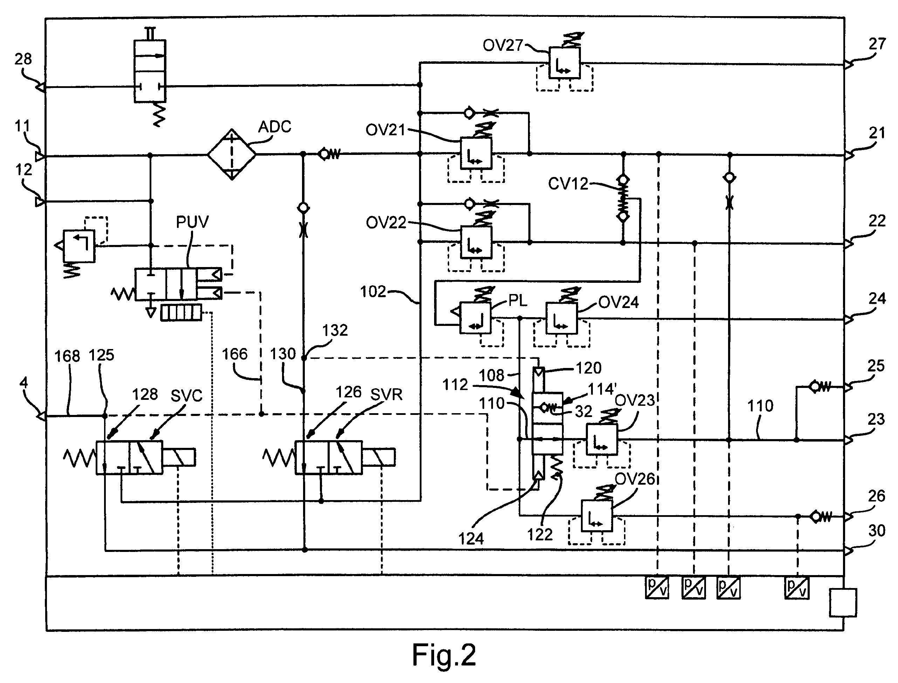

Fig. 2 zeigt eine Luftaufbereitungsanlage ähnlich wie in Fig. 1, so dass bezüglich des allgemeinen Aufbaus auf die Beschreibung der Fig. 1 verwiesen werden kann.

Die Luftaufbereitungsanlage gemäß Fig. 2 unterscheidet sich von der Luftaufbereitungsanlage gemäß Fig. 1 im wesentlichen dadurch, dass ein gesondertes Magnetventil zur Vorsteuerung des 2/2-Wegeventils 114' der Ventilanordnung 112 in der Anhänger- und/oder Feststellbremsenversorgungsleitung 110 fehlt. Stattdessen ist dieses 2/2-Wegeventil 114' mit zwei Vorsteuereingängen durch eine Druckbeaufschlagung eines ersten pneumatischen Vorsteuereingangs 120 gegen die Kraft einer Rückstellfeder 122 in Richtung seiner zweiten Ventilstellung und über durch eine Druckbeaufschlagung eines zweiten pneumatischen Vorsteuereingangs 124 in Richtung seiner ersten Ventilstellung betätigbar. Der erste Vorsteuereingang 120 ist an dem Ausgang 126 des ersten Magnetventils SVR angeschlossen, während der zweite Vorsteuereingang 124 an dem Ausgang 128 des zweiten Magnetventils SVC angeschlossen ist. Auf diese Weise werden die beiden ohnehin vorhandenen Magnetventile SVC, SVR für die Kompressoransteuerung bzw. für die Regenerationsluftsteuerung genutzt, um das 2/2-Wegeventil 114' anzusteuern. Hierdurch kann vorteilhaft auf ein gesondertes Vorsteuerventil verzichtet werden.

Weiter ist in Fig. 2 erkennbar, dass Entlüftungsventil PUV von dem zweiten Magnetventil SVC über eine pneumatische Steuerleitung 166 ansteuerbar ist. Sobald das zweite Magnetventil SVC in seiner zweiten Ventilstellung die Hauptversorgungsleitung 102 mit dieser Steuerleitung 166 verbindet, wird das Entlüftungsventil PUV in seine zweite Ventilstellung verstellt, in der es ein Abströmen von Druckluft aus der Regenerationsleitung 130 über den Lufttrockner ADC und das Entlüftungsventil PUV ermöglicht.

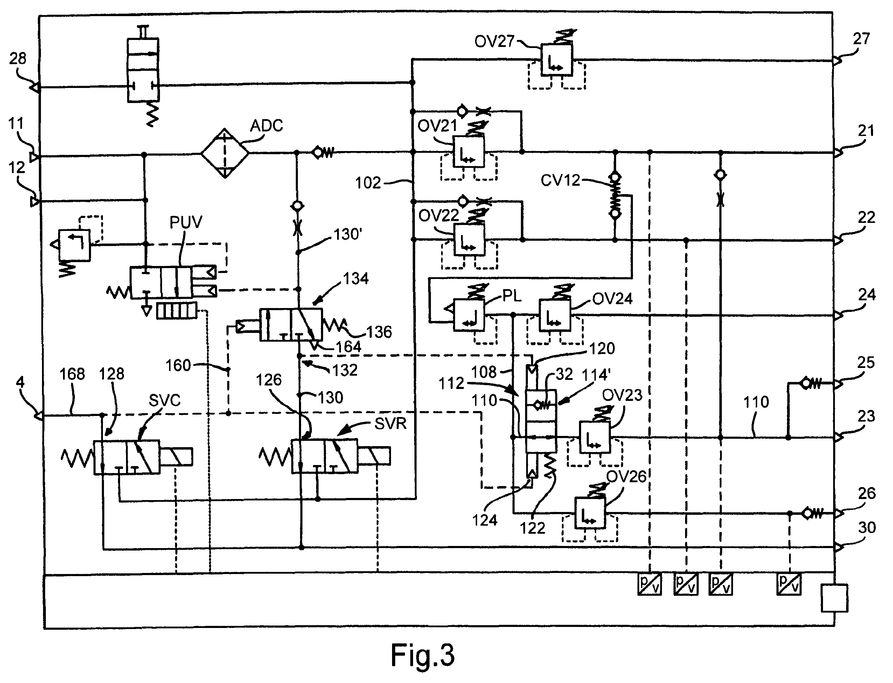

Fig. 3 zeigt eine Luftaufbereitungsanlage etwa gemäß der Fig. 2. Im Unterschied zur Luftaufbereitungsanlage gemäß Fig. 2 wird das Entlüftungsventil PUV nicht von dem zweiten Magnetventil SVC sondern von dem ersten Magnetventil SVR angesteuert. Auch bei dieser Luftaufbereitungsanlage wird das 2/2-Wegeventil 114' mit seinen zwei Vorsteuereingängen von den Magnetventilen SVR für eine Regenerationsluftsteuerung bzw. SVC für die Kompressoransteuerung angesteuert. Im Gegensatz zur Luftaufbereitungsanlage der Fig. 2 ist jedoch in der Regenerationsleitung 130, an die über eine Abzweigung 132 der erste Vorsteuereingang 120 des 2/2-Wegeventils 114' angeschlossen ist, stromabwärts hinter dieser Abzweigung 132 ein zusätzliches vorgesteuertes 2/2-Wegeventil 134 angeordnet, welches in einer ersten, in der Fig. 3 dargestellten Ventilstellung die Regenerationsleitung 130 unterbricht bzw. deren stromabwärtigen Abschnitt 130' mit einer Entlüftungsöffnung 164 verbindet, und das in einer zweiten Ventilstellung die Regenerationsleitung 130 zum genannten stromabwärtigen Abschnitt 130' hin öffnet.

Wie aus Fig. 3 ersichtlich ist, wird dieses zusätzliche 2/2-Wegeventil 134 von dem Kompressordruckluftkreis zugeordneten zweiten Magnetventil SVC über eine pneumatische Steuerleitung 160 gegen die Kraft einer Rückstellfeder 136 aus der ersten Ventilstellung in die zweite Ventilstellung geschaltet. Dieses zusätzliche 2/2-Wegeventil 134 bewirkt, dass nur dann Regenerationsluft über den stromabwärtigen Abschnitt 130' der Regenerationsleitung 130 bereitgestellt wird, wenn beide Magnetventile SVC und SVR in ihrer zweiten Ventilstellung sind. Das zusätzliche 2/2-Wegeventil 134 kann abweichend von der Darstellung in Fig. 3 über das Magnetventil SVC mit Druckluft versorgt und von dem Magnetventil SVR vorgesteuert werden. Dies bewirkt, dass die Regenerationsluft dann von der Kompressorsteuerleitung 168 abgezweigt wird.

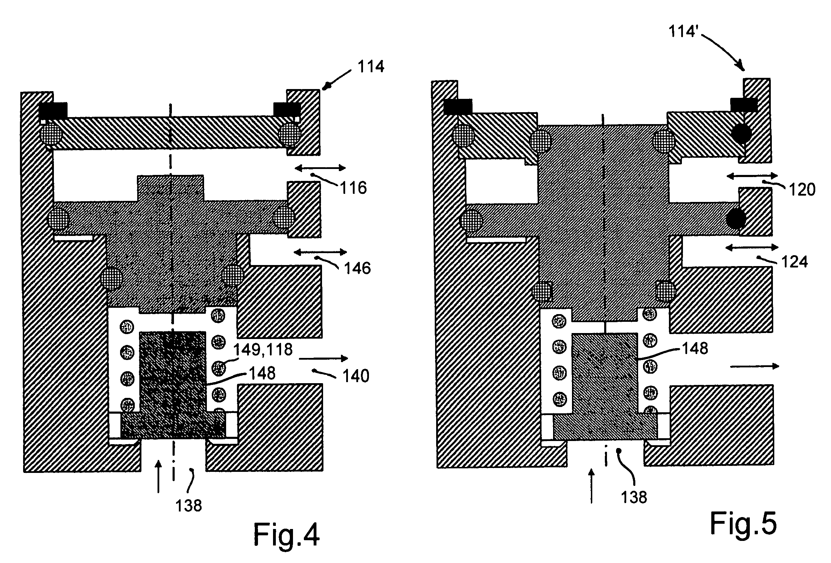

Fig. 4 zeigt schematisch das 2/2-Wegeventil 114 gemäß Fig. 1 mit einem ersten Anschluss 138 für die vom Druckbegrenzungsventil PL kommende Versorgungsleitung 108, 110 und einem zweiten Anschluss 140 für eine zum Überströmventil OV23 führende Leitung 142 (siehe Fig. 1). Der erste Vorsteuereingang 116 dient der Belüftung des 2/2-Wegeventils 114 durch das dritte Magnetventil SV23 über die Vorsteuerleitung 170, und die Entlüftungsöffnung 146 dient der Entlüftung des 2/2-Wegeventils 114. In der in Fig. 4 gezeigten Situation ist die Vorsteuerleitung 170 und damit auch das 2/2-Wege-ventil 114 belüftet, so dass es seine zweite Ventilstellung einnimmt. Dabei bilden die Anschlüsse 138, 140 im Zusammenwirken mit dem federbelasteten Rückschlagelement 148 ein Rückschlagventil. Die das Rückschlagelement 148 belastende Feder 149 dient gleichzeitig als Rückstellfeder 118, die das 2/2-Wegeventil 114 bei seiner Entlüftung wieder in seine erste Ventilstellung bewegt und sich dabei entspannt, so dass der Weg zum zweiten Anschluss 140 zumindest weitgehend freigegeben ist. Die Feder 118, 149 gemäß Fig. 4 ist vorzugsweise so ausgelegt, dass ihre in dieser Situation verbleibende Rückstellkraft auf das Rückschlagelement 148 so gering ist, dass von einem quasi offenen 2/2-Wegeventil 114 gesprochen werden kann. Es ist aber auch möglich, anstelle nur einer Feder zwei einzelne und getrennt wirkende Federn 118 und 149 am 2/2-Wegeventil 114 anzuordnen.

Fig. 5 zeigt das 2/2-Wegeventil 114' gemäß Fig. 2 mit seinen zwei Vorsteuereingängen. Es unterscheidet sich von dem Ventil 114 gemäß Fig. 4 im wesentlichen dadurch, dass es sowohl einen ersten Vorsteuereingang 120 für die Belüftung über das erste Magnetventil SVR als auch einen zweiten Vorsteuereingang 124 für die Belüftung über das zweite Magnetventil SVC hat, wie anhand der Fig. 2 bereits erläutert wurde. In Fig. 5 nimmt das 2/2-Wegeventil 114' seine zweite Ventilstellung ein, bei der das Rückschlagventil aktiv ist.

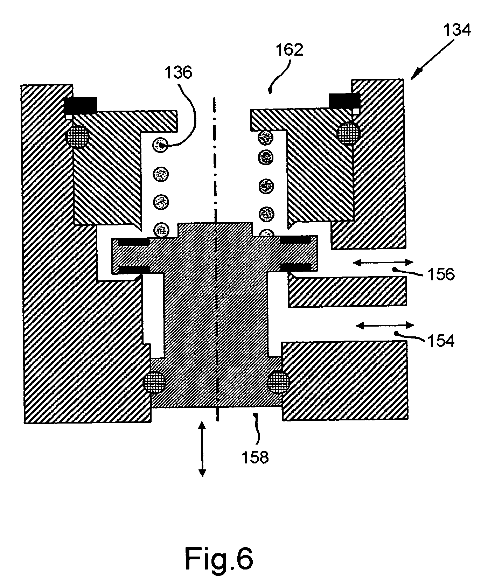

Fig. 6 zeigt eine schematische Darstellung des zusätzlichen vorgesteuerten 2/2-Wegeventils 134 gemäß Fig. 3, wie es beispielsweise in der Luftaufbereitungsanlage gemäß der Fig. 3 zum Einsatz gelangen kann. Es hat einen ersten Anschluss 154 für eine vom ersten Magnetventil SVR kommende Regenerationsleitung 130, einen zweiten Anschluss 156 für den stromabwärtigen Abschnitt 130' dieser Regenerationsleitung 130 sowie einen Vorsteuereingang 158, der mit einer vom zweiten Magnetventil SVC kommenden Steuerleitung 160 verbunden ist. In der dargestellten Ventilstellung ist der Weg vom ersten Anschluss 154 zum zweiten Anschluss 156 gesperrt, und dieser zweite Anschluss 156 ist über einen dritten Anschluss 162 (Entlüftungsöffnung 164) entlüftet. Bei einer Betätigung des 2/2-Wegeventils 134 über den Vorsteuereingang 158 gegen die Kraft der Rückstellfeder 136 wird der erste Anschluss 154 mit dem zweiten Anschluss 156 und damit die Regenerationsleitung 130 mit dem stromabwärtigen Abschnitt 130' dieser Regenerationsleitung 130 verbunden, wie bereits anhand der Fig. 3 erläutert wurde.

### Bezugszeichen

- 4: Anschluss, Ausgang zur Kompressorsteuerung
- 11: Anschluss, Eingang vom Kompressor
- 12: Anschluss, Eingang von externer Druckluftquelle
- 21: Anschluss, Ausgang zu Betriebsbremse Hinterachse
- 22: Anschluss, Ausgang zu Betriebsbremse Vorderachse
- 23: Anschluss, Ausgang zur Anhängerversorgung
- 24: Anschluss, Ausgang für weitere Verbraucher
- 25: Anschluss, Ausgang zur Feststellbremse
- 26: Anschluss, Ausgang zum Schaltgetriebe
- 27: Anschluss, Ausgang zur Luftfederung
- 28: Anschluss, Ausgang zur Reifenbefüllvorrichtung
- 30: Entlüftungsanschluss
- 32: Vorspannfeder des Wegeventils 114,114'
- 102: Hauptversorgungsleitung
- 104: Elektronische Steuerungseinrichtung
- 106: Versorgungsleitung für die Anschlüsse 23, 24, 25, 26
- 108: Versorgungsleitung für Anhänger und Schaltgetriebe
- 110: Anhänger- und/oder Feststellbremsenversorgungsleitung
- 112: Ventilanordnung
- 114: Wegeventil mit einem Vorsteuereingang
- 114': Wegeventil mit zwei Vorsteuereingängen
- 116: Vorsteuereingang am Wegeventil 114
- 118: Rückstellfeder
- 120: Erster Vorsteuereingang am Wegeventil 114'
- 122: Rückstellfeder
- 124: Zweiter Vorsteuereingang am Wegeventil 114'
- 125: Erste Abzweigung
- 126: Ausgang am Magnetventil SVR
- 128: Ausgang am Magnetventil SVC
- 130: Regenerationsleitung
- 130': Stromabwärtiger Abschnitt der Regenerationsleitung 130
- 132: Zweite Abzweigung
- 134: Zusätzliches Wegeventil
- 136: Rückstellfeder am Wegeventil 134
- 138: Erster Anschluss am Wegeventil 114
- 140: Anschluss am Wegeventil 114
- 142: Leitung zwischen Wegeventil 114 und Überströmventil OV23
- 144: Vorsteuereingang am Wegeventil 114
- 146: Entlüftungsöffnung am Wegeventil 114
- 148: Rückschlagelement
- 149: Feder
- 154: Erster Anschluss am Wegeventil 134
- 156: Zweiter Anschluss am Wegeventil 134
- 158: Vorsteuereingang am Wegeventil 134
- 160: Pneumatische Steuerleitung
- 162: Dritter Anschluss am Wegeventil 134
- 164: Entlüftungsöffnung
- 166: Pneumatische Steuerleitung zum Entlüftungsventil PUV
- 168: Kompressorsteuerleitung
- 170: Vorsteuerleitung zum Wegeventil 114, 114'
- ADC: Lufttrockner
- CV12: Wechselventil ohne Rückströmung
- OV21-OV27: Überströmventile
- PL: Druckbegrenzungsventil
- PUV: Entlüftungsventil
- SV23: Drittes Magnetventil (Vorsteuerung Wegeventil 114)
- SVC: Zweites Magnetventil (Kompressorsteuerung)
- SVR: Erstes Magnetventil (Regenerationsteuerung)

## Patentansprüche

1. Luftaufbereitungsanlage für die Druckluftversorgung von Nutzkraftfahrzeugen, mit mehreren an eine Hauptversorgungsleitung (102) angeschlossenen Druckluftkreisen, wobei eine Anhänger- und/oder Feststellbremsenversorgungsleitung (110) an eine Versorgungsleitung (108) eines oder mehrerer anderer Druckluftkreise angeschlossen ist, und wobei in der Anhänger- und/oder Feststellbremsenversorgungsleitung (110) eine bei einem vorgegebenen Versorgungsdruck automatisch öffnende, zusätzlich pneumatisch in eine Öffnungsstellung vorsteuerbare Ventilanordnung (112) vorgesehen ist, **dadurch gekennzeichnet, dass** die Ventilanordnung (112) ein Wegeventil (114, 114') aufweist, welches in einer ersten Ventilstellung geöffnet ist, und in einer zweiten Ventilstellung ein in Richtung zu einem Anhänger- und/oder Feststellbremsenversorgungsanschluss (23, 25) hin öffnendes, durch eine Vorspannfeder (32) in Schließrichtung belastetes Rückschlagventil bildet, sowie ein dem Wegeventil (114, 114') nachgeordnetes, bei einem vorgegebenen Öffnungsdruck öffnendes Überströmventil (OV23).

2. Luftaufbereitungsanlage nach Anspruch 1, **dadurch gekennzeichnet, dass** das Wegeventil (114) durch Druckbeaufschlagung seines pneumatischen Vorsteuereingangs (116) gegen die Kraft einer Rückstellfeder (118) in seine zweite Ventilstellung verstellbar ist.

3. Luftaufbereitungsanlage nach Anspruch 1, **dadurch gekennzeichnet, dass** das Wegeventil (114) in seiner ersten Ventilstellung durch Druckbeaufschlagung seines pneumatischen Vorsteuereingangs (116) gegen eine eingangsseitig und ausgangsseitig wirkende Druckkraft in Richtung seiner zweiten Ventilstellung verstellbar ist.

4. Luftaufbereitungsanlage nach Anspruch 2 oder 3, **dadurch gekennzeichnet, dass** der Vorsteuereingang (116) des Wegeventils (114) über ein zugeordnetes, von einer elektronischen Steuerungseinrichtung (104) ansteuerbares Magnetventil (SV23) be- und entlüftbar ist.

5. Luftaufbereitungsanlage nach Anspruch 1, **dadurch gekennzeichnet, dass** das Wegeventil (114') über einen ersten pneumatischen Vorsteuereingang (120) in Richtung seiner zweiten Ventilstellung gegen die Kraft einer Rückstellfeder (122) und über einen zweiten pneumatischen Vorsteuereingang (124) in Richtung seiner ersten Ventilstellung verstellbar ist.

6. Luftaufbereitungsanlage nach Anspruch 5, mit wenigstens zwei jeweils über ein zugeordnetes Magnetventil (SVR, SVC) versorgten Druckluftkreisen, **dadurch gekennzeichnet, dass** der Ausgang (126) eines ersten Magnetventils (SVR) mit dem ersten Vorsteuereingang (120) des Wegeventils (114') in der Anhänger- und/oder Feststellbremsenversorgungsleitung (110) verbunden ist, und dass der Ausgang (128) eines zweiten Magnetventils (SVC) mit dem zweiten Vorsteuereingang (124) des Wegeventils (114') in der Anhänger- und/oder Feststellbremsenversorgungsleitung (110) verbunden ist.

7. Luftaufbereitungsanlage nach einem der Ansprüche 1 bis 6, **dadurch gekennzeichnet, dass** das Wegeventil (114,114') als 2/2-Wegeventil ausgebildet ist.

8. Luftaufbereitungsanlage nach Anspruch 6 oder 7, wenn von Anspruch 6 abhängig, **dadurch gekennzeichnet, dass** das erste Magnetventil (SVR) als Regenerations-Steuerventil vorgesehen ist, welches in einer ersten Ventilstellung die Regenerationsleitung (130) sowie den ersten Vorsteuereingang (120) des Wegeventils (114') in der Anhänger- und/oder Feststellbremsenversorgungsleitung (110) mit einem Entlüftungsanschluss (30) verbindet, und in der zweiten Ventilstellung die Hauptversorgungsleitung (102) mit einer Regenerationsleitung (130) sowie über eine Abzweigung (132) die Hauptversorgungsleitung (102) mit dem ersten Vorsteuereingang (120) des Wegeventils (114') in der Anhänger- und/oder Feststellbremsenversorgungsleitung (110) verbindet.

9. Luftaufbereitungsanlage nach Anspruch 6 oder 7, wenn von Anspruch 6 abhängig, **dadurch gekennzeichnet, dass** das zweite Magnetventil (SVC) als ein Kompressor-Steuerventil vorgesehen ist, welches in einer ersten Ventilstellung den Kompressor-Steuerungsanschluss (4) sowie den zweiten Vorsteuereingang (124) des Wegeventils (114') in der Anhänger- und/oder Feststellbremsenversorgungsleitung (110) mit dem Entlüftungsanschluss (30) verbindet, und in der zweiten Ventilstellung die Hauptversorgungsleitung (102) mit einem Kompressor-Steuerungsanschluss (4) sowie über eine Abzweigung (125) die Hauptversorgungsleitung (102) mit dem zweiten Vorsteuereingang (124) des Wegeventils (114') in der Anhänger- und/oder Feststellbremsenversorgungsleitung (110) verbindet.

10. Luftaufbereitungsanlage nach Anspruch 7, **dadurch gekennzeichnet, dass** in der Regenerationsleitung (130) hinter der Abzweigung (132) zum Wegeventil (114') der Anhänger- und/oder Feststellbremsenversorgungsleitung (110) ein zusätzliches vorgesteuertes Wegeventil (134) angeordnet ist, welches in einer ersten Ventilstellung einen stromabwärtigen Abschnitt (130') der Regenerationsleitung (130) mit einer Entlüftungsöffnung (164) verbindet, wobei das zusätzliche vorgesteuerte Wegeventil (134) über einen am Ausgang (128) des zweiten Magnetventils (SVC) angeschlossenen Vorsteuereingang in Richtung seiner zweiten Ventilstellung gegen die Kraft einer Rückstellfeder (136) verstellbar ist, und dass das zusätzliche vorgesteuerte Wegeventil (134) in der zweien Ventilstellung geöffnet ist.

## Claims

1. Air treatment system for the supply of compressed air in commercial motor vehicles, having a plurality of compressed-air circuits connected to a main supply line (102), wherein a trailer and/or parking brake supply line (110) is connected to a supply line (108) of one or more other compressed-air circuits, and wherein, in the trailer and/or parking brake supply line (110), there is provided a valve arrangement (112) which automatically opens at a predefined supply pressure and which can additionally be pneumatically pilot-controlled into an open position, **characterized in that** the valve arrangement (112) has a directional valve (114, 114'), which is open in a first valve position and which, in a second valve position, forms a check valve, said check valve opening in the direction of a trailer and/or parking brake supply port (23, 25) and being loaded in a closing direction by a preloading spring (32), and has an overflow valve (OV23), which is positioned downstream of the directional valve (114, 114') and which opens at a predefined opening pressure.

2. Air treatment system according to Claim 1, **characterized in that** the directional valve (114) can be moved into its second valve position counter to the force of a return spring (118) by pressurizing its pneumatic pilot control inlet (116).

3. Air treatment system according to Claim 1, **characterized in that**, in its first valve position, the directional valve (114) can be moved in the direction of its second valve position counter to a pressure force acting on the inlet side and on the outlet side by pressurizing its pneumatic pilot control inlet (116).

4. Air treatment system according to Claim 2 or 3, **characterized in that** the pilot control inlet (116) of the directional valve (114) can be supplied with air and vented via an associated solenoid valve (SV23) controllable by an electronic control device (104).

5. Air treatment system according to Claim 1, **characterized in that** the directional valve (114') can be moved in the direction of its second valve position counter to the force of a return spring (122) by means of a first pneumatic pilot control inlet (120) and can be moved in the direction of its first valve position by means of a second pneumatic pilot control inlet (124).

6. Air treatment system according to Claim 5, having at least two compressed-air circuits, each supplied via an associated solenoid valve (SVR, SVC), **characterized in that** the outlet (126) of a first solenoid valve (SVR) is connected to the first pilot control inlet (120) of the directional valve (114') in the trailer and/or parking brake supply line (110), and **in that** the outlet (128) of a second solenoid valve (SVC) is connected to the second pilot control inlet (124) of the directional valve (114') in the trailer and/or parking brake supply line (110).

7. Air treatment system according to one of Claims 1 to 6, **characterized in that** the directional valve (114, 114') is designed as a 2/2-way valve.

8. Air treatment system according to Claim 6 or 7, where dependent on Claim 6, **characterized in that** the first solenoid valve (SVR) is provided as a regeneration control valve which, in a first valve position, connects the regeneration line (130) and the first pilot control inlet (120) of the directional valve (114') in the trailer and/or parking brake supply line (110) to a vent port (30) and, in the second valve position, connects the main supply line (102) to a regeneration line (130) and, via a branch (132), connects the main supply line (102) to the first pilot control inlet (120) of the directional valve (114') in the trailer and/or parking brake supply line (110).

9. Air treatment system according to Claim 6 or 7, where dependent on Claim 6, **characterized in that** the second solenoid valve (SVC) is provided as a compressor control valve which, in a first valve position, connects the compressor control port (4) and the second pilot control inlet (124) of the directional valve (114') in the trailer and/or parking brake supply line (110) to the vent port (30) and, in the second valve position, connects the main supply line (102) to a compressor control port (4) and, via a branch (125), connects the main supply line (102) to the second pilot control inlet (124) of the directional valve (114') in the trailer and/or parking brake supply line (110).

10. Air treatment system according to Claim 7, **characterized in that** an additional pilot-controlled directional valve (134) is arranged in the regeneration line (130) after the branch (132) leading to the directional valve (114') of the trailer and/or parking brake supply line (110), said additional directional valve connecting a downstream section (130') of the regeneration line (130) to a vent opening (164) in a first valve position, wherein the additional pilot-controlled directional valve (134) can be moved in the direction of its second valve position, counter to the force of a return spring (136), by means of a pilot control inlet connected to the outlet (128) of the second solenoid valve (SVC), and **in that** the additional pilot-controlled directional valve (134) is open in the second valve position.

## Revendications

1. Installation de préparation d'air pour l'alimentation en air comprimé de véhicules utilitaires, avec plusieurs circuits d'air comprimé raccordés à une conduite d'alimentation principale (102), dans laquelle une conduite d'alimentation de frein de remorque et/ou de frein de stationnement (110) est raccordée à une conduite d'alimentation (108) d'un ou de plusieurs autre(s) circuit(s) d'air comprimé, et dans laquelle il est prévu dans la conduite d'alimentation de frein de remorque et/ou de frein de stationnement (110) un dispositif de soupape (112) s'ouvrant automatiquement pour une pression d'alimentation prédéterminée et pouvant en outre être commandée en commande pilote pneumatiquement dans une position d'ouverture, **caractérisée en ce que** le dispositif de soupape (112) présente un distributeur (114, 114') qui dans une première position de soupape est ouvert et dans une deuxième position de soupape forme un clapet antiretour s'ouvrant en direction d'un raccord d'alimentation de frein de remorque et/ou de frein de stationnement (23, 25) et poussé par un ressort précontraint (32) dans la direction de fermeture, ainsi qu'une soupape de débordement (OV23) située en aval du distributeur (114, 114') et s'ouvrant pour une pression d'ouverture prédéterminée.

2. Installation de préparation d'air comprimé selon la revendication 1, **caractérisée en ce que** le distributeur (114) peut être déplacé dans sa deuxième position de soupape contre la force d'un ressort de rappel (118) par application de pression à son entrée de commande pilote pneumatique (116).

3. Installation de préparation d'air selon la revendication 1, **caractérisée en ce que** le distributeur (114) dans sa première position de soupape peut être déplacé dans sa deuxième position de soupape contre une force de pression agissant côté entrée et côté sortie par application de pression à son entrée de commande pilote pneumatique (116).

4. Installation de préparation d'air selon la revendication 2 ou 3, **caractérisée en ce que** l'entrée de commande pilote (116) du distributeur (114) peut être aérée et purgée au moyen d'une soupape magnétique associée (SV23) pouvant être commandée par un dispositif de commande électronique (104).

5. Installation de préparation d'air selon la revendication 1, **caractérisée en ce que** le distributeur (114') peut être déplacé en direction de sa deuxième position de soupape au moyen d'une première entrée de commande pilote pneumatique (120) contre la force d'un ressort de rappel (122) et en direction de sa première position de soupape au moyen d'une deuxième entrée de commande pilote pneumatique (124).

6. Installation de préparation d'air selon la revendication 5, avec au moins deux circuits d'air comprimé alimentés respectivement par une soupape magnétique associée (SVR, SVC), **caractérisée en ce que** la sortie (126) d'une première soupape magnétique (SVR) est raccordée à la première entrée de commande pilote (120) du distributeur (114') dans la conduite d'alimentation de frein de remorque et/ou de frein de stationnement (110), et **en ce que** la sortie (128) d'une deuxième soupape magnétique (SVC) est raccordée à la deuxième entrée de commande pilote (124) du distributeur (114') dans la conduite d'alimentation de frein de remorque et/ou de frein de stationnement (110).

7. Installation de préparation d'air selon l'une quelconque des revendications 1 à 6, **caractérisée en ce que** le distributeur (114, 114') est une vanne à 2/2 voies.

8. Installation de préparation d'air selon la revendication 6 ou 7, lorsqu'elle dépend de la revendication 6, **caractérisée en ce que** la première soupape magnétique (SVR) est prévue comme soupape de commande de régénération, qui dans une première position de soupape relie la conduite de régénération (130) ainsi que la première entrée de commande pilote (120) du distributeur (114') dans la conduite d'alimentation de frein de remorque et/ou de frein de stationnement (110) à un raccord d'échappement d'air (30), et dans la deuxième position de soupape relie la conduite d'alimentation principale (102) à une conduite de régénération (130) ainsi que par une déviation (132) la conduite d'alimentation principale (102) à la première entrée de commande pilote (120) du distributeur (114') dans la conduite d'alimentation de frein de remorque et/ou de frein de stationnement (110).

9. Installation de préparation d'air selon la revendication 6 ou 7, lorsqu'elle dépend de la revendication 6, **caractérisée en ce que** la deuxième soupape magnétique (SVC) est prévue comme soupape de commande de compresseur, qui dans une première position de soupape relie le raccord de commande de compresseur (4) ainsi que la deuxième entrée de commande pilote (124) du distributeur (114') dans la conduite d'alimentation de frein de remorque et/ou de frein de stationnement (110) au raccord d'échappement d'air (30), et dans la deuxième position de soupape relie la conduite d'alimentation principale (102) à un raccord de commande de compresseur (4) ainsi que par une déviation (125) la conduite d'alimentation principale (102) à la deuxième entrée de commande pilote (124) du distributeur (114') dans la conduite d'alimentation de frein de remorque et/ou de frein de stationnement (110).

10. Installation de préparation d'air selon la revendication 7, **caractérisée en ce qu'**un distributeur supplémentaire à commande pilote (134) est disposé dans la conduite de régénération (130) en aval de la déviation (132) vers le distributeur (114') de la conduite d'alimentation de frein de remorque et/ou de frein de stationnement (110), lequel dans une première position de soupape relie une section aval (130') de la conduite de régénération (130) à une ouverture d'échappement d'air (164), dans laquelle le distributeur supplémentaire à commande pilote (134) est déplaçable en direction de sa deuxième position de soupape contre la force d'un ressort de rappel (136) via une entrée de commande pilote raccordée à la sortie (128) de la deuxième soupape magnétique (SVC), et **en ce que** le distributeur supplémentaire à commande pilote (134) dans la deuxième position de soupape est ouvert.
